# EUROPEAN PATENT APPLICATION

(11) **EP 3 093 861 A1**
(43) Date of publication of application: **16.11.2016**
(21) Application number: 15735214.7
(22) Date of filing: 08.01.2015
(51) Int. Cl.: H01G 11/06, H01G 11/42, H01G 11/68, H01G 11/70

(54) **POSITIVE ELECTRODE FOR LITHIUM ION CAPACITORS AND LITHIUM ION CAPACITOR USING SAME**

(30) Priority: 09.01.2014 JP 2014002546; 14.11.2014 JP 2014231865
(71) Applicant: Sumitomo Electric Industries, Ltd., Osaka-shi, Osaka 541-0041 (JP)
(72) Inventor: MAJIMA, Masatoshi, Itami-shi Hyogo 664-0016 (JP); OKUNO, Kazuki, Itami-shi Hyogo 664-0016 (JP); OGAWA, Mitsuyasu, Itami-shi Hyogo 664-0016 (JP); UEDA, Mitsuyasu, Itami-shi Hyogo 664-0016 (JP); TAKEYAMA, Tomoharu, Itami-shi Hyogo 664-0016 (JP); TAKAHASHI, Kenji, Itami-shi Hyogo 664-0016 (JP)
(74) Representative: Boult Wade Tennant
(86) International application number: PCT/JP2015/050335
(87) International publication number: WO 2015/105136

(57) **Abstract**

A positive electrode for a lithium ion capacitor includes a positive electrode current collector with a three-dimensional network structure and a positive electrode mixture which contains a positive electrode active material and with which the positive electrode current collector is filled. The positive electrode current collector contains aluminum or an aluminum alloy. The positive electrode active material contains a porous carbon material that reversibly carries at least an anion. The positive electrode has an active material density of 350 to 1000 mg/cm³.

## Description

### Technical Field

The present invention relates to a lithium ion capacitor, and particularly to an improvement in a positive electrode used for lithium ion capacitors.

### Background Art

With environmental problems being highlighted, systems for converting clean energy such as sunlight or wind power into electric power and storing the electric power as electric energy have been actively developed. Known examples of such electricity storage devices include lithium ion secondary batteries, electric double layer capacitors, and lithium ion capacitors. In recent years, attention has been paid to capacitors such as electric double layer capacitors and lithium ion capacitors in terms of excellent instantaneous charge-discharge properties, good output properties, and ease of handling.

In particular, lithium ion capacitors have advantages of both lithium ion secondary batteries and electric double layer capacitors, and tend to have a relatively high capacity. Therefore, such lithium ion capacitors are promising in that their ranges of uses will be expanded. In general, lithium ion capacitors include a positive electrode containing a porous carbon material or the like as a positive electrode active material, a negative electrode containing a material that intercalates and deintercalates lithium ions as a negative electrode active material, and a lithium ion conductive nonaqueous electrolyte.

Lithium ion capacitors generally include a positive electrode including an aluminum foil serving as a positive electrode current collector and a positive electrode mixture layer formed on the aluminum foil and containing a positive electrode active material.

For example, in Example of PTL 1, a positive electrode produced by applying a slurry containing an activated carbon powder serving as a positive electrode active material onto an aluminum foil and drying the slurry is used for lithium ion capacitors. In PTL 2, a metal foil formed of aluminum or the like is used as a positive electrode current collector of a positive electrode in lithium ion capacitors.

### Citation List

### Patent Literature

PTL 1: Japanese Unexamined Patent Application Publication No. 2013-157603
PTL 2: Japanese Unexamined Patent Application Publication No. 2013-123006

### Summary of Invention

### Technical Problem

Capacitors can be rapidly charged and discharged compared with lithium ion secondary batteries, but have a disadvantage in that high energy density is not easily achieved. Among capacitors, lithium ion capacitors tend to have a relatively high energy density, but a further improvement in energy density is required. From the viewpoint of increasing the energy density, it is advantageous to increase the density of an active material contained in an electrode. Therefore, a large amount of electrode mixture is desirably retained in a current collector to increase the active material density.

However, it is difficult to thickly coat the surface of a metal foil serving as a current collector with an electrode mixture. Even if the surface is thickly coated with the electrode mixture, cracking and/or separation of the formed electrode mixture layer occurs when the electrode mixture layer is compressed to a high degree in order to increase the active material density. Even in the case where the electrode mixture layer is compressed to a high degree, the actual upper limit of the active material density is believed to be 350 mg/cm³. Even if a thick electrode mixture layer is formed on the surface of the metal foil, it is difficult to achieve high output because the contact between a nonaqueous electrolyte and an active material is restricted and the distance from the metal foil to the active material increases. As described above, there is a trade-off between the increase in the energy density of lithium ion capacitors and the increase in the output of lithium ion capacitors.

### Solution to Problem

Accordingly, it is an object to provide a positive electrode for a lithium ion capacitor whose energy density can be increased and in which high output can be achieved, and a lithium ion capacitor that uses the positive electrode.

In view of the foregoing, one aspect of the present invention relates to a positive electrode for a lithium ion capacitor, the positive electrode including a positive electrode current collector with a three-dimensional network structure and a positive electrode mixture which contains a positive electrode active material and with which the positive electrode current collector is filled. The positive electrode current collector contains aluminum or an aluminum alloy. The positive electrode active material contains a porous carbon material that reversibly carries at least an anion. The positive electrode has an active material density (apparent density, the same applies hereafter) of 350 to 1000 mg/cm³.

Another aspect of the present invention relates to a lithium ion capacitor including the positive electrode, a negative electrode containing a negative electrode active material, a separator disposed between the positive electrode and the negative electrode, and a lithium ion conductive nonaqueous electrolyte.

### Advantageous Effects of Invention

According to the above structure, the energy density can be increased by increasing the active material density of the positive electrode in the lithium ion capacitor, and the output of the lithium ion capacitor can be increased.

### Brief Description of Drawings

[Fig. 1 Figure 1 schematically illustrates a part of a skeleton of a current collector used in a positive electrode for a lithium ion capacitor according to an embodiment of the present invention.
[Fig. 2] Figure 2 is a schematic sectional view illustrating the current collector in Fig. 1.
[Fig. 3] Figure 3 is a longitudinal sectional view schematically illustrating a lithium ion capacitor according to an embodiment of the present invention.

### Description of Embodiments

### [Description of embodiments of the invention]

First, embodiments of the present invention will be listed and described.

An embodiment of the present invention relates to (1) a positive electrode for a lithium ion capacitor, the positive electrode including a positive electrode current collector with a three-dimensional network structure and a positive electrode mixture which contains a positive electrode active material and with which the positive electrode current collector is filled. The positive electrode current collector contains aluminum or an aluminum alloy. The positive electrode active material contains a porous carbon material that reversibly carries at least an anion. The positive electrode has an active material density (i.e., the mass of the positive electrode active material per unit volume (per 1 cm³) of the positive electrode) of 350 to 1000 mg/cm³.

In known positive electrodes for lithium ion capacitors, a metal foil such as an aluminum foil is generally used as a positive electrode current collector. A positive electrode mixture is in the form of slurry. Therefore, even when the positive electrode mixture is applied onto a surface of such a positive electrode current collector, it is difficult to form a thick layer of the positive electrode mixture. Furthermore, even if a thick positive electrode mixture layer is successfully formed, when the positive electrode mixture layer is compressed to a high degree in order to increase the active material density, cracking and/or separation of the positive electrode mixture layer occurs. Therefore, it is difficult to increase the active material density of a positive electrode. When a positive electrode mixture layer is formed on a metal foil, the upper limit of the active material density of the positive electrode is only about 350 mg/cm³. In the case where a positive electrode mixture layer is formed on a metal foil, even if the active material density is increased to some degree, the contact between a nonaqueous electrolyte and an active material is restricted and the distance from the metal foil to the active material tends to increase. Thus, the conductivity in the positive electrode mixture layer readily decreases, which makes it difficult to achieve high output.

In the case where a positive electrode including a metal foil as a positive electrode current collector is used and the lithium ion capacitor is discharged at a high rate (e.g., 50 mA/cm²), the capacity decreases to about 50% of the initial capacity. For example, in typical positive electrodes that use an aluminum foil as a positive electrode current collector and activated carbon as a positive electrode active material, the initial capacity per unit volume (per 1 cm³) is about 14 mAh/cm³. When this positive electrode is discharged at 50 mA/cm², the capacity per unit volume decreases to about half the initial capacity, i.e., about 7 mAh/cm³. This degrades the practicality of the positive electrode. That is, it has been believed to be impossible to increase the active material density of a positive electrode in a lithium ion capacitor to more than 350 mg/cm³.

In contrast, according to an embodiment of the present invention, the active material density of a positive electrode can be increased to 350 to 1000 mg/cm³. Therefore, the capacity and energy density of the positive electrode can be improved, which improves the capacity (or energy density) of the lithium ion capacitor. Since a positive electrode current collector with a three-dimensional network structure is filled with a positive electrode mixture, the cracking and/or separation of the positive electrode mixture layer can be suppressed even when the active material density of the positive electrode is high. By using the positive electrode current collector with a three-dimensional network structure, a nonaqueous electrolyte can be sufficiently retained near the active material, and an increase in the distance between the positive electrode current collector and positive electrode active material particles can be suppressed. This suppresses degradation of the adsorbing and desorbing properties of ions and/or the conductivity in the positive electrode, and thus high output can be achieved.

In the lithium ion capacitor that uses the positive electrode according to an embodiment of the present invention, as described above, the initial capacity per unit volume can be considerably increased compared with a lithium ion capacitor that uses a positive electrode including a metal foil as a positive electrode current collector.

In the lithium ion capacitor that uses the positive electrode according to an embodiment of the present invention, even when the lithium ion capacitor is discharged at a high rate (e.g., 50 mA/cm²), the capacity per unit volume can be set to 55% or more, preferably 60% or more, and more preferably 65% or more of the initial capacity per unit volume.
(2) The positive electrode current collector preferably has a hollow skeleton. When the positive electrode current collector has such a skeleton, the mass ratio of the current collector to the positive electrode can be decreased, which is advantageous in terms of increasing the ratio of the positive electrode mixture (or positive electrode active material) to the positive electrode. The hollow skeleton of the positive electrode current collector has a tunnel-like shape or a tubular shape, which allows a nonaqueous electrolyte to readily circulate in the lithium ion capacitor.
(3) The porous carbon material is preferably activated carbon. When the activated carbon is used as the positive electrode active material, the capacity of the lithium ion capacitor is easily increased and the cost can also be decreased.
(4) The positive electrode preferably has an active material density of 600 to 1000 mg/cm³. The positive electrode can be densified in such a manner, and thus the capacity or energy density of the lithium ion capacitor can be further improved.
(5) The positive electrode preferably has a thickness of 100 to 2000 µm. In general, if a positive electrode has such a large thickness, the output tends to decrease. In the embodiment of the present invention in which the positive electrode current collector with a three-dimensional network structure is employed, however, a decrease in the conductivity of the positive electrode can be suppressed, and high output can be achieved.
(6) The mass of the positive electrode current collector per unit projected area (i.e., weight per unit area) is preferably 2 to 100 mg/cm², and the positive electrode current collector preferably has a tensile strength of 0.2 MPa or more. In the case where the tensile strength of the positive electrode current collector is within the above range, even when the positive electrode is compressed to a high degree, the breakage and/or excessive deformation of the positive electrode current collector is easily suppressed. This is advantageous in terms of increasing the active material density of the positive electrode.

The tensile strength of the positive electrode current collector can be measured by pulling a test specimen with a predetermined size (e.g., 10 cm in length x 1 cm in width x 1 mm in thickness) in the longitudinal direction until the test specimen is broken. The strength at which the test specimen is broken is defined as a tensile strength.

Another embodiment of the present invention relates to (7) a lithium ion capacitor including the positive electrode, a negative electrode containing a negative electrode active material, a separator disposed between the positive electrode and the negative electrode, and a lithium ion conductive nonaqueous electrolyte. When the above positive electrode is employed, a lithium ion capacitor having high energy density and high output can be provided.

### [Details of embodiments of the invention]

Hereafter, specific examples of the positive electrode for a lithium ion capacitor and the lithium ion capacitor according to embodiments of the present invention will be described with reference to the attached drawings. The present invention is indicated by the appended claims without being limited by such examples. The present invention is intended to embrace equivalents of the scope of the claims and all modifications within the scope of the claims.

### (Positive electrode for lithium ion capacitor)

The positive electrode includes a positive electrode current collector and a positive electrode mixture attached to the positive electrode current collector. The positive electrode current collector has a three-dimensional network structure and contains aluminum or an aluminum alloy. The positive electrode current collector with a three-dimensional network structure is a porous body having a porous structure, and thus the positive electrode current collector (specifically, the porous structure of the positive electrode current collector) is filled with the positive electrode mixture.

### (Positive electrode current collector)

The aluminum content in the positive electrode current collector is, for example, 80 mass% or more, preferably 90 mass% or more, and more preferably 95 mass% or more or 98 mass% or more. The aluminum content in the positive electrode current collector is 100 mass% or less and may be 99.9 mass% or less. These lower limits and upper limits can be freely combined with each other. The aluminum content in the positive electrode current collector may be, for example, 80 to 100 mass% or 95 to 100 mass%. The positive electrode current collector may contain unavoidable impurities.

Examples of the aluminum alloy for forming the positive electrode current collector include aluminum-iron alloys, aluminum-copper alloys, aluminum-manganese alloys, aluminum-silicon alloys, aluminum-nickel alloys, aluminum-magnesium alloys, aluminum-magnesium-silicon alloys, and aluminum-zinc alloys.

The three-dimensional network structure of the positive electrode current collector refers to a structure in which fibrous portions (or rod-shaped portions) formed of aluminum or an aluminum alloy are three-dimensionally connected to each other to form a mesh-like network.

In a preferred embodiment, the positive electrode current collector with a three-dimensional network structure has a cavity (hollow) therein. The cavity in the skeleton of the positive electrode current collector has a shape of interconnected pores. Therefore, the skeleton of the positive electrode current collector has a tunnel-like shape or a tubular shape. The positive electrode current collector having a hollow skeleton has a bulky three-dimensional structure, but is extremely lightweight.

The positive electrode current collector can be formed by, for example, coating a porous body made of resin and having continuous voids with a metal (e.g., aluminum and/or aluminum alloy) for the current collector. The coating with a metal can be performed by, for example, a plating treatment, a gas phase method (e.g., vapor deposition, plasma chemical vapor deposition, and sputtering), or application of a metal paste. As a result of the coating with a metal, a three-dimensional network skeleton (or structure) is formed. Among these coating methods, a plating treatment is preferably employed.

The plating treatment may be performed by a publicly known plating method such as an electrolytic plating method or a molten salt plating method as long as a metal layer functioning as a current collector can be formed on the surface (including surfaces of continuous voids) of the resin porous body. As a result of the plating treatment, a metal porous body with a three-dimensional network structure having a shape corresponding to the shape of the resin porous body is formed. If the plating treatment is performed by an electrolytic plating method, a conductive layer is desirably formed before the electrolytic plating method is performed. The conductive layer may be formed on the surface of the resin porous body by non-electrolytic plating, vapor deposition, sputtering, or the like. Alternatively, the conductive layer may be formed by applying a conductive agent or immersing the resin porous body in a dispersion liquid containing a conductive agent.

The resin porous body is not particularly limited as long as it has continuous voids. A resin foamed body, a resin nonwoven fabric, and the like can be used as the resin porous body. Any resin may be used for such a porous body as long as the inside of the skeleton can be made hollow by, for example, decomposing or dissolving the resin after the coating with a metal while the shape of a metal skeleton with a three-dimensional network structure is maintained. The resin in the skeleton is desirably removed by being decomposed or dissolved through a heat treatment or the like. After the heat treatment, components (e.g., resin, decomposed product, unreacted monomer, and additive contained in the resin) left in the skeleton may be removed by performing washing or the like. If necessary, the resin may be removed through a heat treatment while an appropriate voltage is applied. The heat treatment may be performed while a plated porous body is immersed in a molten salt plating bath and a voltage is applied.

Examples of the resin for the resin porous body include thermosetting resins such as thermosetting polyurethane and melamine resin, olefin resins (e.g., polyethylene and polypropylene), and thermoplastic resins such as thermoplastic polyurethane. When the resin foamed body is used, individual cellular pores formed inside the foamed body are interconnected to form continuous voids, though this depends on the type of resin and/or the method for producing a foamed body. In such a foamed body, the size of cellular pores tends to be small and uniform, and thus a current collector is preferably formed by using the resin foamed body. A thermosetting polyurethane or the like is preferably used from the viewpoint of easily forming pores having a uniform size and/or shape.

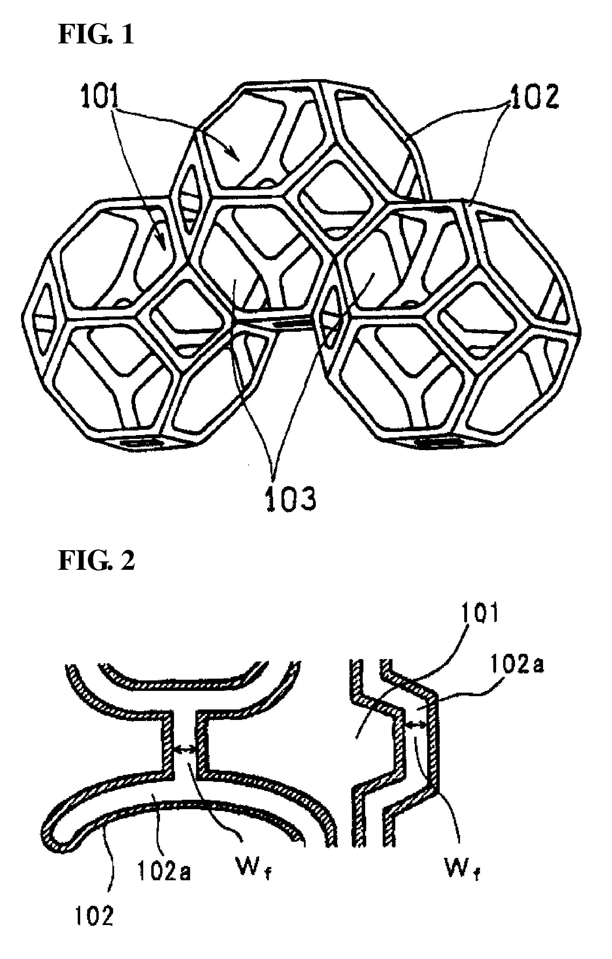

After the coating with a metal, the resin inside the skeleton is removed to form a cavity (e.g., interconnected-pore-shaped cavity) inside the skeleton of the metal porous body. Thus, a hollow skeleton is formed. The width of the cavity inside the skeleton (specifically, the width W_{f} of a cavity in Fig. 2 described below) is, for example, 0.5 to 5 µm and preferably 1 to 4 µm or 2 to 3 µm on average.

The obtained positive electrode current collector (metal porous body) has a three-dimensional network skeleton corresponding to the shape of the resin foamed body. Specifically, the positive electrode current collector includes continuous voids (i.e., interconnected pores) each including a large number of cellular pores and formed by interconnecting the cellular pores. An opening (or window) is formed between the adjacent cellular pores, and the pores are preferably interconnected with each other through this opening. The shape of the opening (or window) is not particularly limited and is, for example, a substantially polygonal shape (e.g., substantially triangular shape, substantially tetragonal shape, substantially pentagonal shape, and/or substantially hexagonal shape). The term "substantially polygonal shape" refers to a polygonal shape and a shape similar to a polygonal shape (e.g., a polygonal shape whose corners are rounded and a polygonal shape whose sides are curved lines).

Figure 1 schematically illustrates the skeleton of the positive electrode current collector. The positive electrode current collector includes a plurality of cellular pores 101 surrounded by a metal skeleton 102, and an opening (or window) 103 having a substantially polygonal shape is formed between the adjacent pores 101. The adjacent pores 101 are interconnected with each other through the opening 103, and thus the positive electrode current collector includes continuous voids. The metal skeleton 102 defines the shape of each cellular pore and is three-dimensionally formed so as to connect the pores. Thus, a three-dimensional network skeleton is formed. The skeleton 102 contains aluminum or an aluminum alloy.

The porosity of the thus-obtained current collector is, for example, 40 to 99 vol%, preferably 60 to 98 vol%, and more preferably 80 to 98 vol% or 90 to 98 vol%. The average pore diameter (the average diameter of cellular pores interconnected with each other) in the three-dimensional network skeleton is, for example, 50 to 1000 µm, preferably 100 to 900 µm,and more preferably 350 to 900 µm. Herein, the average pore diameter is preferably smaller than the thickness of the current collector (or the positive electrode).

The positive electrode is formed by filling the current collector with the positive electrode mixture, and then normally performing drying and compressing (or rolling) the current collector in the thickness direction of the current collector. As a result of the compression, the porosity and average pore diameter of the current collector changes. The above-mentioned porosity and average pore diameter are a porosity and an average pore diameter of a current collector before rolling (before filling with a mixture).

Such a current collector has a very high porosity and a large specific surface area. That is, a large amount of active material can be attached, in a large area, to the surface of the current collector including the surfaces in the voids. Furthermore, since the contact area between the current collector and the active material and the porosity can be increased while the voids are filled with a large amount of active material, the active material can be effectively used. In a positive electrode for lithium ion capacitors, the conductivity is normally increased by adding a conductive assistant. When the above-described current collector is used, high conductivity is easily achieved even if the amount of the conductive assistant added is decreased. Therefore, the output and/or energy density (and capacity) of lithium ion capacitors can be effectively improved.

The specific surface area (BET specific surface area) of the current collector is, for example, 100 to 700 cm²/g, preferably 150 to 650 cm²/g, and more preferably 200 to 600 cm²/g.

Figure 2 is a sectional view schematically illustrating a part of the positive electrode current collector in Fig. 1. The positive electrode current collector includes a metal skeleton 102 and cellular pores 101 surrounded by the skeleton 102. An opening (not illustrated) is formed between pores 101 adjacent to each other. The adjacent pores are interconnected with each other through the opening to form continuous voids. Tunnel-shaped or tubular cavities 102a having a width W_{f} are formed inside the skeleton 102 of the current collector. The positive electrode is formed by filling the positive electrode current collector with the positive electrode mixture and then rolling the positive electrode current collector in the thickness direction. Figure 2 illustrates a state before the rolling. In the positive electrode obtained by the rolling, the skeleton 102 is slightly compressed in the thickness direction, and the cavities in the skeleton 102 are also compressed. However, the cavities in the skeleton 102 are still left to some extent even after the rolling. In the lithium ion capacitor, therefore, the nonaqueous electrolyte can circulate through the cavities in the skeleton 102.

The positive electrode current collector desirably has a predetermined tensile strength so that the breakage and/or excessive deformation is prevented when the current collector is filled with the positive electrode mixture and rolled (or compressed). The tensile strength of the positive electrode current collector is, for example, 0.2 MPa or more, preferably 0.3 MPa or more, and more preferably 0.5 MPa or more or 1 MPa or more. The tensile strength of the positive electrode current collector is, for example, 5 MPa or less.

The weight per unit area of the positive electrode current collector (i.e., the mass of the positive electrode current collector per unit projected area) is, for example, 2 to 100 mg/cm², preferably 8 to 80 mg/cm², and more preferably 10 to 50 mg/cm².

In an embodiment of the present invention, by using such a positive electrode current collector with a three-dimensional network structure, the filling amount of the positive electrode mixture can be increased, which increases the active material density of the positive electrode. Furthermore, even when the active material density of the positive electrode is high, the cracking and/or separation of the positive electrode mixture layer can be suppressed. By using the positive electrode current collector with a three-dimensional network structure, the distance between the positive electrode current collector and positive electrode active material particles is decreased, and a three-dimensional network of the positive electrode current collector is built in the positive electrode. Thus, high conductivity can be maintained in the positive electrode. Furthermore, the nonaqueous electrolyte can be sufficiently retained near the positive electrode active material. As a result, high output can be achieved even when the active material density of the positive electrode is high.

### (Positive electrode mixture)

The positive electrode mixture contains a positive electrode active material as an essential component and may contain a conductive assistant and/or a binder as an optional component. When the positive electrode mixture contains a conductive assistant, the conductivity of the positive electrode can be further improved. When the positive electrode mixture contains a binder, stronger bonds can be formed between positive electrode active material particles, between positive electrode active material particles and the conductive assistant, and between positive electrode active material particles or the conductive assistant and the positive electrode current collector.

The positive electrode active material contains a porous carbon material that reversibly carries (specifically, adsorbs and desorbs) at least an anion. The porous carbon material is preferably a material that reversibly carries (specifically, adsorbs and desorbs) an anion and a cation (e.g., lithium ion). Examples of the porous carbon material that reversibly carries at least an anion include materials that cause a non-Faradaic reaction during charging and discharging, such as activated carbon, nanoporous carbon, mesoporous carbon, microporous carbon, and carbon nanotube. The porous carbon material may be subjected to an activation treatment or may be used without an activation treatment. These porous carbon materials may be used alone or in combination of two or more. Among the porous carbon materials, for example, activated carbon or nanoporous carbon is preferably used. The nanoporous carbon refers to a porous carbon having fine pores on the order of subnanometers to submicrometers (e.g., 0.1 to 100 nm).

The positive electrode active material may optionally contain another active material, in addition to the porous carbon material. The content of the porous carbon material in the positive electrode active material is preferably more than 50 mass% and may be 80 mass% or more or 90 mass% or more. The content of the porous carbon material in the positive electrode active material is 100 mass% or less. In particular, the content of the activated carbon and the nanoporous carbon in the positive electrode active material is preferably within the above range. The case where the positive electrode active material contains only porous carbon materials (in particular, activated carbon and/or nanoporous carbon) is also preferred.

The porous carbon such as nanoporous carbon, mesoporous carbon, or microporous carbon is, for example, a publicly known porous carbon used for lithium ion capacitors. For example, a porous carbon obtained by heating a metal carbide such as silicon carbide or titanium carbide in an atmosphere containing chlorine gas may be used.

The activated carbon is, for example, a publicly known activated carbon used for lithium ion capacitors. Examples of a raw material for activated carbon include wood, coconut shells, spent liquor, coal or coal pitch obtained by thermal cracking of coal, heavy oil or petroleum pitch obtained by thermal cracking of heavy oil, and phenolic resin. The carbonized material is then generally activated. Examples of the activation method include a gas activation method and a chemical activation method.

The average particle diameter (the median diameter in the volume-based particle size distribution, the same applies hereafter) of the activated carbon is not particularly limited, and is preferably 20 µm or less. The specific surface area is also not particularly limited, and is preferably about 800 to 3000 m²/g. When the specific surface area is within the above range, the electrostatic capacity of the lithium ion capacitor is advantageously increased and the internal resistance can be decreased.

The type of conductive assistant is not particularly limited. Examples of the conductive assistant include carbon black such as acetylene black and Ketjenblack, graphite (e.g., natural graphite such as flaky graphite and earthy graphite, and synthetic graphite), conductive compounds such as ruthenium oxide, and conductive fibers such as carbon fiber and metal fiber. The amount of the conductive assistant is, for example, 0 to 30 parts by mass and preferably 3 to 20 parts by mass relative to 100 parts by mass of the positive electrode active material. When the amount of the conductive assistant is within the above range, the density of the positive electrode active material is easily increased while the conductivity of the positive electrode mixture is ensured. In an embodiment of the present invention, a positive electrode current collector with a three-dimensional network structure is used, and thus high conductivity is easily achieved in the positive electrode even when the amount of the conductive assistant is small. For example, the amount of the conductive assistant may be 5 parts by mass or less (e.g., 0 to 5 parts by mass) or 3 parts by mass or less (e.g., 0.1 to 3 parts by mass) relative to 100 parts by mass of the positive electrode active material.

The type of binder is not particularly limited. Examples of the binder include fluororesins such as polyvinylidene fluoride (PVDF) and polytetrafluoroethylene; chlorine-containing vinyl resins such as polyvinyl chloride; polyolefin resins; rubber polymers such as styrene-butadiene rubber; polyvinylpyrrolidone and polyvinyl alcohol; cellulose derivatives (carboxyalkyl celluloses such as carboxymethyl cellulose (CMC); salts (e.g., alkali metal salts) of carboxyalkyl celluloses, such as sodium salts of CMC; and cellulose ethers such as hydroxyalkyl celluloses, for example, hydroxyethyl cellulose and hydroxypropylmethyl cellulose.

The amount of the binder is not particularly limited. The amount of the binder can be, for example, selected from the range of about 0.5 to 15 parts by mass relative to 100 parts by mass of the positive electrode active material and is preferably 1 to 12 parts by mass and more preferably 3 to 10 parts by mass. In an embodiment of the present invention, a positive electrode current collector with a three-dimensional network structure is used. Therefore, a large amount of the positive electrode mixture can be retained in the positive electrode current collector even when the amount of the binder is small. The amount of the binder may be 5 parts by mass or less (e.g., 1 to 5 parts by mass) or 2 to 4 parts by mass relative to 100 parts by mass of the positive electrode active material.

The positive electrode mixture is normally used in the form of a slurry containing constituent components (e.g., positive electrode active material, conductive assistant, and binder) of the positive electrode mixture. The positive electrode mixture slurry is prepared by dispersing the constituent components of the positive electrode mixture in a dispersion medium. The dispersion medium is, for example, an organic solvent such as N-methyl-2-pyrrolidone (NMP) or water. The dispersion medium is removed by performing drying in the production process of the positive electrode (e.g., after filling the current collector with the slurry and/or after performing rolling).

The solid content of the positive electrode mixture slurry is, for example, 10 to 60 mass%, preferably 20 to 50 mass%, and more preferably 25 to 40 mass%. When the solid content of the positive electrode mixture slurry is within the above range, the active material density of the positive electrode is easily increased.

The method for filling the positive electrode current collector with the positive electrode mixture slurry is not particularly limited. The method is, for example, a method that uses a publicly known coating machine (e.g., die coater, dip coater, comma coater, and gravure coater), a method that uses a doctor blade or the like, or an injection method. When the filling with a slurry is performed using a die coater, the filling amount of the positive electrode mixture is easily increased. This is advantageous in terms of increasing the active material density of the positive electrode.

By filling the positive electrode current collector with the positive electrode mixture and then compressing (or rolling) the positive electrode current collector in the thickness direction, the active material density of the positive electrode is controlled to be within the predetermined range. The active material density of the positive electrode is 350 mg/cm³ or more, preferably more than 350 mg/cm³, more preferably 400 mg/cm³ or more, more preferably 450 mg/cm³ or more, more preferably 550 mg/cm³ or more, and particularly preferably 600 mg/cm³ or more. The active material density of the positive electrode is 1000 mg/cm³ or less, preferably 950 mg/cm³ or less, and more preferably 900 mg/cm³ or less. These lower limits and upper limits can be freely combined with each other. That is, the active material density of the positive electrode may be, for example, 350 to 1000 mg/cm³, 400 to 1000 mg/cm³, 450 to 1000 mg/cm³, 550 to 1000 mg/cm³, 600 to 1000 mg/cm³, 400 to 900 mg/cm³, 450 to 900 mg/cm³, 550 to 900 mg/cm³, or 600 to 900 mg/cm³.

By using the positive electrode current collector with a three-dimensional network structure and increasing the filling amount of the positive electrode mixture, the active material density of the positive electrode can be increased as described above. Since the active material density of the positive electrode is high, the capacity and energy density of the positive electrode can be improved, which improves the energy density of the lithium ion capacitor. To increase the active material density of the positive electrode to a value of more than 1000 mg/cm³, the positive electrode needs to be compressed to a density higher than or equal to the bulk density of the active material. However, it is difficult to perform such compression. Therefore, the active material density of the positive electrode is set to 1000 mg/cm³ or less.

The thickness of the positive electrode is, for example, 100 to 2000 µm,preferably 500 to 2000 µm or 600 to 1500 µm, and more preferably 700 to 1200 µm or 750 to 1100 µm. In an embodiment of the present invention, since the degradation of the conductivity of the positive electrode can be suppressed, high output can be achieved even if the positive electrode has such a large thickness.

The weight per unit area (i.e., the mass per unit projected area) of the positive electrode depends on the thickness of the positive electrode and/or the active material density of the positive electrode, and is, for example, 35 mg/cm² or more, preferably 45 mg/cm² or more, and more preferably 50 mg/cm² or more or 60 mg/cm² or more. The weight per unit area of the positive electrode is, for example, 150 mg/cm² or less and preferably 130 mg/cm² or less. These lower limits and upper limits can be freely combined with each other. The weight per unit area of the positive electrode may be, for example, 45 to 100 mg/cm² or 50 to 150 mg/cm². In an embodiment of the present invention, since the filling amount of the positive electrode mixture can be increased, the weight per unit area of the positive electrode can also be increased. This is advantageous in terms of increasing the energy density.

### (Lithium ion capacitor)

The lithium ion capacitor includes the above-described positive electrode, a negative electrode containing a negative electrode active material, a separator disposed between the positive electrode and the negative electrode, and a lithium ion conductive nonaqueous electrolyte. Components other than the positive electrode are, for example, publicly known components used in lithium ion capacitors.

Hereafter, constituent components other than the positive electrode in the lithium ion capacitor will be described in detail.

### (Negative electrode)

The negative electrode may include a negative electrode active material and a negative electrode current collector that retains the negative electrode active material.

The negative electrode current collector may be a metal foil, but is preferably a metal porous body with a three-dimensional network structure like the positive electrode current collector and more preferably a metal porous body having a hollow skeleton with a three-dimensional network structure from the viewpoint of increasing the capacity of the lithium ion capacitor. The negative electrode current collector is preferably made of, for example, copper, a copper alloy, nickel, a nickel alloy, or stainless steel.

The negative electrode active material is, for example, a material that reversibly carries (specifically, intercalates and deintercalates) lithium ions. Examples of the material include materials that cause a Faradaic reaction during charging and discharging, such as carbon materials that intercalate and deintercalate lithium ions, lithium titanium oxide (e.g., spinel-type lithium titanium oxide such as lithium titanate), silicon oxide, silicon alloys, tin oxide, and tin alloys. Examples of the carbon material include graphitizable carbon (soft carbon), non-graphitizable carbon (hard carbon), and graphite (e.g., carbon materials having a graphite crystal structure, such as synthetic graphite and natural graphite). These negative electrode active materials may be used alone or in combination of two or more. The negative electrode active material preferably has a theoretical capacity of 300 mAh/g or more. Among the negative electrode active materials, a carbon material is preferred and graphite and/or hard carbon is particularly preferred.

The content of the carbons material in the negative electrode active material is preferably more than 50 mass% and may be 80 mass% or more or 90 mass% or more. The content of the carbon material in the negative electrode active material is 100 mass% or less. In particular, the content of the graphite and/or hard carbon in the negative electrode active material is preferably within the above range. The case where the negative electrode active material contains only the carbon material (in particular, graphite and/or hard carbon) is also preferred.

The negative electrode active material is preferably doped with lithium in advance in order to decrease the negative electrode potential. This increases the voltage of the capacitor, which is more advantageous in terms of increasing the capacity of the lithium ion capacitor. For the purpose of suppressing precipitation of lithium, the capacity of the negative electrode is desirably higher than that of the positive electrode.

The doping with lithium can be performed by a publicly known method. The doping with lithium may be performed during the assembly of a capacitor. For example, a lithium metal foil is accommodated in a capacitor container together with a positive electrode, a negative electrode, and a nonaqueous electrolyte, and the assembled capacitor is kept warm in a thermostatic chamber at about 60°C. As a result, lithium ions are eluted from the lithium metal foil and the negative electrode active material is doped with lithium ions.

The negative electrode is obtained by, for example, applying a negative electrode mixture slurry containing a negative electrode active material onto a negative electrode current collector or filling a negative electrode current collector with a negative electrode mixture slurry containing a negative electrode active material, then removing a dispersion medium contained in the negative electrode mixture slurry, and optionally compressing (or rolling) the current collector that has retained the negative electrode active material. Alternatively, the negative electrode may be obtained by forming a deposited film of the negative electrode active material on a surface of the negative electrode current collector by a gas phase method such as vapor deposition or sputtering.

In the negative electrode, the filling amount of the negative electrode mixture may also be increased as in the case of the positive electrode. Such a negative electrode can be produced in the same manner as in the positive electrode.

The negative electrode mixture slurry may contain, for example, a binder and/or a conductive assistant, in addition to the negative electrode active material. The dispersion medium and the binder can be appropriately selected from those exemplified for the positive electrode mixture. The amount of the binder relative to 100 parts by mass of the negative electrode active material can be appropriately selected from the range of the amount of the binder relative to 100 parts by mass of the positive electrode active material.

The conductive assistant is not particularly limited. Examples of the conductive assistant include carbon black such as acetylene black and Ketjenblack, conductive fibers such as carbon fiber and metal fiber, and conductive compounds such as ruthenium oxide. The amount of the conductive assistant is, for example, 1 to 20 parts by mass and preferably 3 to 15 parts by mass relative to 100 parts by mass of the negative electrode active material.

The thickness of the negative electrode can be appropriately selected from, for example, the range of 50 to 2000 µm. When the metal porous body with a three-dimensional network structure is used as the negative electrode current collector, the thickness of the negative electrode is, for example, 100 to 2000 µm and preferably 500 to 2000 µm or 700 to 1500 µm.

### (Separator)

The separator has ionic permeability and is disposed between the positive electrode and the negative electrode, thereby physically separating the electrodes to prevent a short-circuit. The separator has a porous structure and retains a nonaqueous electrolyte in the pores, which allows permeation of ions. The separator can be made of, for example, polyolefin such as polyethylene or polypropylene, polyester such as polyethylene terephthalate, polyamide, polyimide, cellulose, or glass fiber.

The average pore diameter of the separator is not particularly limited, and is, for example, about 0.01 to 5 µm. The thickness of the separator is not particularly limited, and is, for example, about 10 to 100 µm.

### (Nonaqueous electrolyte)

The nonaqueous electrolyte contains an anion and a cation. The nonaqueous electrolyte is preferably a lithium ion conductive nonaqueous electrolyte containing a cation such as a lithium ion. The lithium ion conductive nonaqueous electrolyte is, for example, an electrolyte obtained by dissolving a lithium salt in a nonaqueous solvent or an ionic liquid containing a lithium ion. The ionic liquid is a salt in a molten state (molten salt), and is a liquid having ion conductivity. When an ionic liquid is used as the nonaqueous electrolyte, the nonaqueous electrolyte may contain, for example, a nonaqueous solvent and/or an additive, in addition to the ionic liquid. The content of the ionic liquid in the nonaqueous electrolyte is preferably 60 mass% or more and more preferably 80 mass% or more or 90 mass% or more.

The concentration of the lithium salt or the lithium ion in the nonaqueous electrolyte can be appropriately selected from, for example, the range of 0.3 to 5 mol/L.

The lithium salt is a salt of a lithium ion and a first anion. The type of first anion is not particularly limited. Examples of the first anion include anions of fluorine-containing acids [e.g., fluorine-containing phosphate anions such as a hexafluorophosphate ion (PF₆⁻) and fluorine-containing borate anions such as a tetrafluoroborate ion (BF₄⁻)], anions of chlorine-containing acids [e.g., a perchlorate ion (ClO₄⁻)], anions of oxoacids having an oxalate group [e.g., an oxalatoborate ion such as bis(oxalato)borate ion (B(C₂O₄)₂⁻) and an oxalatophosphate ion such as a tris(oxalato)phosphate ion (P(C₂O₄)₃⁻)], fluoroalkanesulfonate anions [e.g., a trifluoromethanesulfonate ion (CF₃SO₃⁻)], and bis(sulfonyl)amide anions.

The lithium salts may be used alone, or two or more lithium salts containing different first anions may be combined with each other.

Examples of the bis(sulfonyl)amide anion include bis(fluorosulfonyl)amide anions [e.g., a bis(fluorosulfonyl)amide anion (N(SO₂F)₂⁻)],
(fluorosulfonyl)(perfluoroalkylsulfonyl)amide anions [e.g., a
(fluorosulfonyl)(trifluoromethylsulfonyl)amide anion ((FSO₂)(CF₃SO₂)N⁻)], and bis(perfluoroalkylsulfonyl)amide anions [e.g., a bis(trifluoromethylsulfonyl)amide anion (N(SO₂CF₃)₂⁻) and a bis(pentafluoroethylsulfonyl)amide anion (N(SO₂C₂F₅)₂⁻)]. The number of carbon atoms of the perfluoroalkyl group is preferably 1 to 8 and more preferably 1, 2, or 3.

Among the bis(sulfonyl)amide anions, for example, a bis(fluorosulfonyl)amide anion (FSA⁻) and a bis(perfluoroalkylsulfonyl)amide anion (PFSA⁻) such as a bis(trifluoromethylsulfonyl)amide anion (TFSA⁻), a bis(pentafluoroethylsulfonyl)amide anion, or a (fluorosulfonyl)(trifluoromethylsulfonyl)amide anion are preferably used.

The nonaqueous solvent contained in the nonaqueous electrolyte is not particularly limited, and is, for example, a publicly known nonaqueous solvent used for lithium ion capacitors. In terms of ionic conductance, the preferred examples of the nonaqueous solvent include cyclic carbonates such as ethylene carbonate, propylene carbonate, and butylene carbonate; chain carbonates such as dimethyl carbonate, diethyl carbonate, and ethyl methyl carbonate; and cyclic carbonates such as γ-butyrolactone. These nonaqueous solvents may be used alone or in combination of two or more.

The ionic liquid containing a lithium ion contains a lithium ion and a second anion. The second anion is, for example, an anion exemplified for the first anion. Specific examples of the second anion include bis(sulfonyl)amide anions, anions of fluorine-containing acids, anions of chlorine-containing acids, anions of oxoacids having an oxalate group, and fluoroalkanesulfonate anions. These second anions may be used alone or in combination of two or more. The second anion preferably contains at least a bis(sulfonyl)amide anion. The content of the bis(sulfonyl)amide anion in the second anion is, for example, 80 to 100 mol% and preferably 90 to 100 mol%.

The ionic liquid containing a lithium ion may further contain a second cation, in addition to the lithium ion (first cation). The second cation may be, for example, an inorganic cation other than the lithium ion, such as a sodium ion, a magnesium ion, a calcium ion, or an ammonium cation, but is preferably an organic cation. These second cations may be used alone or in combination of two or more.

Examples of the organic cation used as the second cation include cations derived from aliphatic amines, alicyclic amines, and aromatic amines (e.g., quaternary ammonium cations); nitrogen-containing onium cations such as cations having a nitrogen-containing heterocycle (i.e., cations derived from cyclic amines); sulfur-containing onium cations; and phosphorus-containing onium cations.

In addition to the quaternary ammonium cations, nitrogen-containing organic onium cations including pyrrolidine, pyridine, or imidazole as a nitrogen-containing heterocycle skeleton are particularly preferred.

Examples of the quaternary ammonium cations include tetraalkylammonium cations such as a tetramethylammonium cation, an ethyltrimethylammonium cation, a hexyltrimethylammonium cation, a tetraethylammonium cation (TEA⁺), and a methyltriethylammonium cation (TEMA⁺).

The organic onium cation having a pyrrolidine skeleton is preferably an onium cation having two alkyl groups on a single nitrogen atom constituting the pyrrolidine ring. Examples of such an organic onium cation include a 1,1-dimethylpyrrolidinium cation, a 1,1-diethylpyrrolidinium cation, a 1-ethyl-1-methylpyrrolidinium cation, a 1-methyl-1-propylpyrrolidinium cation (MPPY⁺), a 1-butyl-1-methylpyrrolidinium cation (MBPY⁺), and a 1-ethyl-1-propylpyrrolidinium cation.

The organic onium cation having a pyridine skeleton is preferably an onium cation having a single alkyl group on a single nitrogen atom constituting the pyridine ring. Examples of such an organic onium cation include 1-alkylpyridinium cations such as a 1-methylpyridinium cation, a 1-ethylpyridinium cation, and a 1-propylpyridinium cation.

The organic onium cation having an imidazole skeleton is preferably an onium cation having a single alkyl group on each of two nitrogen atoms constituting the imidazole ring. Examples of such an organic onium cation include a 1,3-dimethylimidazolium cation, a 1-ethyl-3-methylimidazolium cation (EMI⁺), a 1-methyl-3-propylimidazolium cation, a 1-butyl-3-methylimidazolium cation (BMI⁺), a 1-ethyl-3-propylimidazolium cation, and a 1-butyl-3-ethylimidazolium cation. Among them, an imidazolium cation having a methyl group and an alkyl group having 2 to 4 carbon atoms, such as EMI⁺ or BMI⁺, is preferred.

The lithium ion capacitor can be produced through, for example, (a) a step of forming an electrode group including a positive electrode, a negative electrode, and a separator disposed between the positive electrode and the negative electrode and (b) a step of accommodating the electrode group and a nonaqueous electrolyte in a cell case.

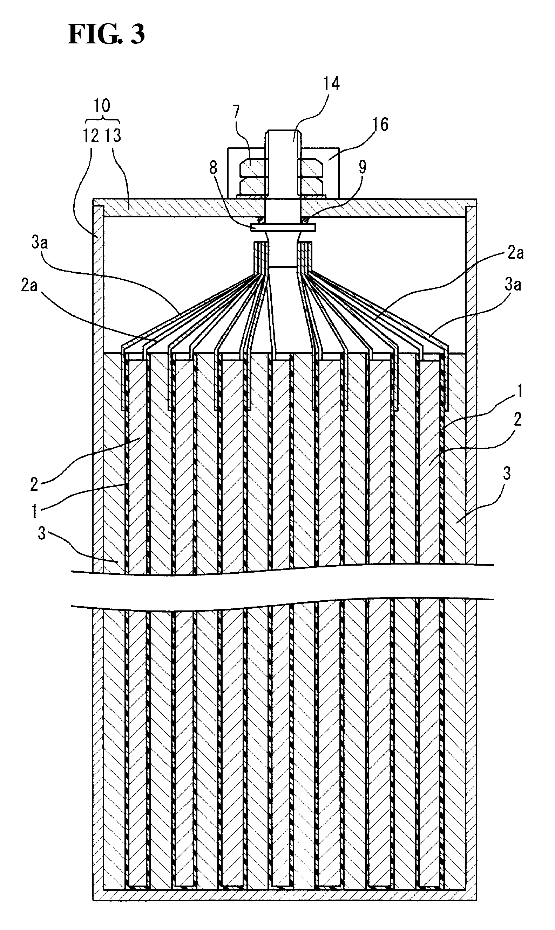

Figure 3 is a longitudinal sectional view schematically illustrating a lithium ion capacitor. The lithium ion capacitor includes a stacked electrode group, a nonaqueous electrolyte (not illustrated), and a prismatic aluminum capacitor case 10 that accommodates the stacked electrode group and the nonaqueous electrolyte. The capacitor case 10 includes a case main body 12 having an open top and a closed bottom and a lid member 13 that closes the top opening.

The lithium ion capacitor is assembled in the following manner. First, positive electrodes 2 and negative electrodes 3 are stacked on top of one another with separators 1 disposed therebetween. An electrode group constituted by the positive electrodes 2 and the negative electrodes 3 stacked on top of one another is inserted into the case main body 12 of the capacitor case 10. The subsequent step is to pour a nonaqueous electrolyte into the case main body 12 to impregnate the gap between the separators 1, the positive electrodes 2, and the negative electrodes 3 constituting the electrode group with the nonaqueous electrolyte. Alternatively, if the nonaqueous electrolyte contains an ionic liquid, the electrode group may be impregnated with the nonaqueous electrolyte, and the electrode group containing the nonaqueous electrolyte may then be accommodated in the case main body 12.

A safety valve 16 for releasing a gas to be generated inside when the internal pressure of the capacitor case 10 increases is disposed at the center of the lid member 13. An external positive electrode terminal 14 that penetrates the lid member 13 is disposed on one side of the lid member 13 with respect to the safety valve 16. An external negative electrode terminal that penetrates the lid member 13 is disposed on the other side of the lid member 13.

The stacked electrode group includes a plurality of positive electrodes 2, a plurality of negative electrodes 3, and a plurality of separators 1 disposed between the electrodes, each of the positive electrodes 2 and the negative electrodes 3 having a rectangular sheet-like shape. Referring to Fig. 3, each of the separators 1 has a bag shape so as to surround a corresponding one of the positive electrodes 2. However, the shape of each separator is not particularly limited. The plurality of positive electrodes 2 and the plurality of negative electrodes 3 are alternately disposed in a stacking direction in the electrode group.

A positive electrode lead strip 2a may be formed on one end portion of each of the positive electrodes 2. The positive electrode lead strips 2a of the plurality of positive electrodes 2 are bundled and connected to the external positive electrode terminal 14 disposed on the lid member 13 of the capacitor case 10, whereby the plurality of positive electrodes 2 are connected in parallel. Similarly, a negative electrode lead strip 3a may be disposed on one end portion of each of the negative electrodes 3. The negative electrode lead strips 3a of the plurality of negative electrodes 3 are bundled and connected to the external negative electrode terminal disposed on the lid member 13 of the capacitor case 10, whereby the plurality of negative electrodes 3 are connected in parallel. The bundle of the positive electrode lead strips 2a and the bundle of the negative electrode lead strips 3a are desirably disposed on left and right sides of one end face of the electrode group with a distance kept between the bundles so as not to come into contact with each other.

Each of the external positive electrode terminal 14 and the external negative electrode terminal is columnar and has a screw groove at least in the externally exposed portion. A nut 7 is engaged with the screw groove of each terminal, and is screwed to secure the nut 7 to the lid member 13. A collar portion 8 is provided in a portion of each terminal inside the capacitor case 10. Screwing the nut 7 allows the collar portion 8 to be secured to the inner surface of the lid member 13 with a gasket 9 provided between the collar portion 8 and the lid member 13.

The electrode group is not limited to the stacked electrode group, and may be an electrode group formed by winding positive electrodes and negative electrodes with separators disposed therebetween. The dimensions of the negative electrode may be larger than those of the positive electrode from the viewpoint of preventing the precipitation of lithium on the negative electrode.

### [Appendix]

Regarding the above embodiments, the following appendixes will be further disclosed.

### (Appendix 1)

A positive electrode for a lithium ion capacitor, including a positive electrode current collector with a three-dimensional network structure and a positive electrode mixture which contains a positive electrode active material and with which the positive electrode current collector is filled,
wherein the positive electrode current collector contains aluminum or an aluminum alloy,
the positive electrode active material contains a porous carbon material that reversibly carries at least an anion, and
the positive electrode has an active material density of 350 to 1000 mg/cm³.

In this positive electrode, the energy density of lithium ion capacitors can be increased, and the output of lithium ion capacitors can be increased.

### (Appendix 2)

In the positive electrode for a lithium ion capacitor according to Appendix 1, the positive electrode preferably has a weight per unit area of 35 to 150 mg/cm². In this positive electrode, the energy density can be further increased while high output is maintained.

### (Appendix 3)

In the positive electrode for a lithium ion capacitor according to Appendix 1 or 2, preferably,
the positive electrode current collector has an interconnected-pore-shaped cavity in a skeleton with the three-dimensional network structure,
the positive electrode current collector has a weight per unit area of 2 to 100 mg/cm²,
the positive electrode current collector has a tensile strength of 0.2 to 5 MPa,
the positive electrode active material contains activated carbon,
the positive electrode has an active material density of 600 to 900 mg/cm³, and
the positive electrode has a thickness of 500 to 2000 µm.

In this positive electrode, the energy density of lithium ion capacitors can be further increased, and the output of lithium ion capacitors can be effectively increased.

### (Appendix 4)

A method for producing a positive electrode for a lithium ion capacitor, the method including:
a first step of filling a positive electrode current collector having a three-dimensional network structure and containing aluminum or an aluminum alloy with a positive electrode mixture slurry which has a solid content of 10 to 60 mass% and which contains a dispersion medium and a positive electrode active material containing a porous carbon material that reversibly carries at least an anion to obtain a filled product,
a second step of drying the filled product to form a positive electrode precursor, and
a third step of compressing the positive electrode precursor in a thickness direction to obtain a positive electrode for a lithium ion capacitor, the positive electrode having an active material density of 350 to 1000 mg/cm³.

According to this production method, a positive electrode for a lithium ion capacitor having high energy density and high output can be easily produced.

### EXAMPLES

Hereafter, the present invention will be specifically described based on Examples and Comparative Examples, but the present invention is not limited to Examples below.

### Example 1

A lithium ion capacitor was produced through the following procedure.

### (1) Production of positive electrode

### (a) Production of positive electrode current collector

A thermosetting polyurethane foam (porosity: 95 vol%, number of pores (cells) per inch (= 2.54 cm) of a surface: about 50, 100 mm in length x 30 mm in width x 1.1 mm in thickness) was prepared.

The foam was immersed in a conductive suspension containing graphite, carbon black (average particle diameter D₅₀: 0.5 µm), a resin binder, a penetrant, and an antifoaming agent, and then dried to form a conductive layer on a surface of the foam. The total content of the graphite and the carbon black in the suspension was 25 mass%.

The foam having the conductive layer formed on the surface thereof was immersed in a molten-salt aluminum plating bath, and a direct current having a current density of 3.6 A/dm² was applied for 90 minutes to form an aluminum layer. The mass of the aluminum layer per apparent area of the foam was 150 g/m². The molten-salt aluminum plating bath contained 33 mol% of 1-ethyl-3-methylimidazolium chloride and 67 mol% of aluminum chloride. The temperature of the molten-salt aluminum plating bath was 40°C.

The foam having the aluminum layer formed on the surface thereof was immersed in a lithium chloride-potassium chloride eutectic molten salt at 500°C, and a negative potential of -1 V was applied for 30 minutes to decompose the foam. The resulting aluminum porous body was taken out from the molten salt, cooled, washed with water, and dried to obtain a positive electrode current collector. The resulting positive electrode current collector had a three-dimensional network porous structure which reflected the shape of the pores of the foam and in which the pores were interconnected with each other. The positive electrode current collector had a porosity of 94 vol%, an average pore size of 550 µm,a specific surface area measured by a BET method (BET specific surface area) of 350 cm²/g, and a thickness of 1000 µm. The tensile strength of the positive electrode current collector measured by the above-described method was 0.3 MPa. The aluminum skeleton having the three-dimensional network structure had, in the inner part thereof, an interconnected-pore-shaped cavity formed by removal of the foam.

### (b) Production of positive electrode

An activated carbon powder (specific surface area: 2300 m²/g, average particle diameter: about 5 µm) serving as a positive electrode active material, acetylene black serving as a conductive assistant, PVDF (NMP solution containing PVDF in a concentration of 12 mass%) serving as a binder, and NMP serving as a dispersion medium were mixed and stirred in a mixer to prepare a positive electrode mixture slurry. The mass ratio of the components in the slurry was activated carbon:acetylene black:PVDF = 87:3:10, and the solid content was 30 mass%.

The current collector obtained in the process (a) described above was filled with the positive electrode mixture slurry using a die coater, and drying was performed at 100°C for 30 minutes. The dried product was rolled using a pair of rolls to produce a positive electrode having a thickness of 900 µm. The produced positive electrode had an active material density of 700 mg/cm³.

### (2) Production of negative electrode

### (a) Production of negative electrode current collector

A Cu coating layer (conductive layer) having a weight per unit area of 5 g/cm² was formed by sputtering on a surface of the same thermosetting polyurethane foam as that used in the production of the positive electrode current collector.

The foam having the conductive layer formed on the surface thereof was used as a workpiece. The foam was immersed in a copper sulfate plating bath, and a direct current having a cathode current density of 2 A/dm² was applied to form a Cu layer on the surface. The copper sulfate plating bath contained 250 g/L of copper sulfate, 50 g/L of sulfuric acid, and 30 g/L of copper chloride. The temperature of the copper sulfate plating bath was 30°C.

The foam having the Cu layer formed on the surface thereof was heat-treated in an air atmosphere at 700°C to decompose the foam and then fired in a hydrogen atmosphere to form an oxide film on the surface. The oxide film is reduced to obtain a copper porous body (negative electrode current collector). The resulting negative electrode current collector had a three-dimensional network porous structure which reflected the shape of the pores of the foam and in which the pores were interconnected with each other. The negative electrode current collector had a porosity of 92 vol%, an average pore diameter of 550 µm,and a BET specific surface area of 200 cm²/g. The copper skeleton having the three-dimensional network structure had, in the inner part thereof, an interconnected-pore-shaped cavity formed by removal of the foam.

### (b) Production of negative electrode

An artificial graphite powder serving as a negative electrode active material, acetylene black serving as a conductive assistant, PVDF serving as a binder, and NMP serving as a dispersion medium were mixed with each other to prepare a negative electrode mixture slurry. The mass ratio of the graphite powder, acetylene black, and PVDF was 90:5:5, and the solid content was 30 mass%.

The current collector obtained in the process (a) described above was filled with the negative electrode mixture slurry using a die coater, and drying was performed at 100°C for 30 minutes. The dried product was rolled using a pair of rolls to produce a negative electrode having a thickness of 200 µm.

### (3) Production of lithium electrode

A lithium foil (thickness: 50 µm) was pressure-bonded to one surface of a punched copper foil (thickness: 20 µm, opening diameter: 50 µm, opening ratio: 50%, 2 cm x 2 cm) serving as a current collector to produce a lithium electrode. A nickel lead was welded on the other surface of the current collector of the lithium electrode.

(4) Production of lithium ion capacitor

The positive electrode produced in (1) and the negative electrode produced in (2) were each cut into a size of 1.5 cm x 1.5 cm, and a portion of the mixture having a width of 0.5 cm was removed along one side to form a current collector-exposed portion. An aluminum lead was welded to the current collector-exposed portion of the positive electrode and a nickel lead was welded to the current collector-exposed portion of the negative electrode. In each of the produced positive electrode and negative electrode, the area of a portion where the mixture was present was 1.5 cm².

Note that, in the processes (1) and (2), the filling amounts of the positive electrode mixture and the negative electrode mixture were controlled so that the chargeable capacity of the negative electrode after pre-doping was larger than or equal to about 1.2 times the capacity of the positive electrode.

The positive electrode and the negative electrode were stacked onto each other with a cellulose separator (thickness: 60 µm) disposed between the positive electrode and the negative electrode. Thus, an electrode group of a single cell was formed. Furthermore, the lithium electrode was disposed on the negative electrode side of the electrode group with a polyolefin separator (a stacked body of a polyethylene microporous membrane and a polypropylene microporous membrane) disposed between the lithium electrode and the electrode group. The resulting stacked product was accommodated in a cell case made of an aluminum laminate sheet.

Subsequently, a nonaqueous electrolyte was poured into the cell case so that the positive electrode, the negative electrode, and the separator were impregnated with the nonaqueous electrolyte. The nonaqueous electrolyte was a solution prepared by dissolving LiPF₆ serving as a lithium salt in a mixed solvent containing ethylene carbonate and diethyl carbonate at a volume ratio of 1:1 so that the concentration of LiPF₆ was 1.0 mol/L. Lastly, the cell case was sealed while the pressure was reduced using a vacuum sealer.

A lead of the negative electrode and a lead of the lithium electrode were connected to a power source outside the cell case. Charging was performed at a current of 0.2 mA/cm² up to a potential of 0 V with respect to metal lithium to pre-dope the negative electrode active material with lithium. Thus, a lithium ion capacitor (a1) was produced. Then, charging and discharging were performed at a current of 1 mA/cm², and the capacity at this time (initial capacity) was measured.

The discharge capacity of the produced lithium ion capacitor was measured through the following procedure.

Charging was performed at a current of 1 mA/cm² until the voltage reached 3.8 V, and discharging was performed at a current of 1 mA/cm² or 50 mA/cm² until the voltage reached 2.2 V. The discharge capacity (mAh) at this time was determined.

### Comparative Example 1

The same positive electrode mixture slurry as in Example 1 was applied onto one surface (roughened surface) of an aluminum foil (thickness: 20 µm) serving as a current collector using a doctor blade to form a coating film. The coating film was dried at 100°C for 30 minutes. The dried film was rolled using a pair of rolls to produce a positive electrode having a thickness of 100 µm.

The same negative electrode mixture slurry as in Example 1 was applied onto one surface (roughened surface) of a copper foil (thickness: 20 µm) serving as a current collector using a doctor blade to form a coating film. The coating film was dried at 100°C for 30 minutes. The dried film was rolled using a pair of rolls to produce a negative electrode having a thickness of 100 µm.

A lithium ion capacitor (b1) was produced and the discharge capacity was measured in the same manner as in Example 1, except that the produced positive electrode and negative electrode were used.

### Examples 2 to 6

Positive electrodes were produced in the same manner as in Example 1, except that the active material densities of the positive electrodes were controlled to values listed in Table 1 by appropriately adjusting the amount of the positive electrode mixture slurry with which the current collector was filled. Lithium ion capacitors (a2 to a5 and b2) were produced and the discharge capacity was measured in the same manner as in Example 1, except that the produced positive electrodes were used.

Table 1 shows the results. Note that a1 to a5 respectively correspond to Examples 1 to 5, b2 corresponds to Example 6, and b1 corresponds to Comparative Example 1. Table 1 also shows the thickness of the positive electrodes.

**[Table 1]**

| | Active material density of positive electrode g/cm³ | Thickness of positive electrode (µm) | Initial capacity mAh/cm³ | Discharge capacity (mAh/cm³) | |
|---|---|---|---|---|---|
| | | | | 1 mA/cm² | 50 mA/cm² |
| b 1 | 350 | 100 | 14.0 | 14.0 | 7.0 |
| b 2 | 400 | 150 | 16.5 | 16.5 | 10.8 |
| a 5 | 450 | 100 | 19.1 | 19.1 | 14.1 |
| a 4 | 450 | 500 | 21.3 | 21.3 | 14.9 |
| a 2 | 500 | 700 | 20.9 | 20.9 | 13.0 |
| a 1 | 700 | 900 | 29.6 | 29.6 | 18.4 |
| a 3 | 900 | 950 | 37.5 | 37.5 | 23.4 |

As shown in Table 1, the lithium ion capacitor b1 (Comparative Example) including an aluminum foil as a positive electrode current collector had a low initial capacity because the amount of the mixture that could be applied to the aluminum foil is limited. In contrast, the lithium ion capacitors a1 to a5 and b2 in Examples had a high initial capacity because the filling amount of the positive electrode mixture could be increased.

The discharge capacity after discharging was performed at a current of 1 mA/cm² was almost the same as the initial capacity in both Examples and Comparative Example. However, the discharge capacity after discharging was performed at a current of 50 mA/cm² was 50% of the initial capacity in the lithium ion capacitor b1 in Comparative Example. As a result, the discharge capacity was considerably decreased from the initial capacity. In the lithium ion capacitors a1 to a5 and b2 in Examples, the discharge capacity after discharging was performed at a current of 50 mA/cm² was decreased from the initial capacity, but was 60% or more of the initial capacity.

As described above, in Examples, lithium ion capacitors having high capacity (i.e., high energy density) were obtained. Furthermore, even when discharging was performed at a high rate, high discharge capacity could be maintained, and high output was achieved.

### Industrial Applicability

In the lithium ion capacitor according to an embodiment of the present invention, high output can be achieved even when the capacity or the energy density is increased. Therefore, the lithium ion capacitor can be used for various applications that require high capacity and high output.

### Reference Signs List

- 101: cellular pore of positive electrode current collector
- 102: metal skeleton of positive electrode current collector
- 102a: cavity in skeleton 102
- W_{f}: width of cavity 102a
- 103: opening between cellular pores

- 1: separator
- 2: positive electrode
- 2a: positive electrode lead strip
- 3: negative electrode
- 3a: negative electrode lead strip
- 7: nut
- 8: collar portion
- 9: gasket
- 10: capacitor case
- 12: case main body
- 13: lid member
- 14: external positive electrode terminal
- 16: safety valve

## Claims

1. A positive electrode for a lithium ion capacitor, comprising a positive electrode current collector with a three-dimensional network structure and a positive electrode mixture which contains a positive electrode active material and with which the positive electrode current collector is filled,
wherein the positive electrode current collector contains aluminum or an aluminum alloy,
the positive electrode active material contains a porous carbon material that reversibly carries at least an anion, and
the positive electrode has an active material density of 350 to 1000 mg/cm³.

2. The positive electrode for a lithium ion capacitor according to Claim 1, wherein the positive electrode current collector has a hollow skeleton.

3. The positive electrode for a lithium ion capacitor according to Claim 1 or 2, wherein the porous carbon material is activated carbon.

4. The positive electrode for a lithium ion capacitor according to any one of Claims 1 to 3, wherein the positive electrode has an active material density of 600 to 1000 mg/cm³.

5. The positive electrode for a lithium ion capacitor according to any one of Claims 1 to 4, wherein the positive electrode has a thickness of 100 to 2000 µm.

6. The positive electrode for a lithium ion capacitor according to any one of Claims 1 to 5,
wherein the positive electrode current collector has a weight per unit area of 2 to 100 mg/cm², and
the positive electrode current collector has a tensile strength of 0.2 MPa or more.

7. A lithium ion capacitor comprising the positive electrode according to Claim 1, a negative electrode containing a negative electrode active material, a separator disposed between the positive electrode and the negative electrode, and a lithium ion conductive nonaqueous electrolyte.
